# EUROPEAN PATENT APPLICATION

(11) **EP 0 714 793 A1**
(43) Date of publication of application: **05.06.1996**
(21) Application number: 94850215.8
(22) Date of filing: 30.11.1994
(51) Int. Cl.: B60B 39/00

(54) **Antiskid device**

(71) Applicant: VBG Produkter AB, S-462 28 Vänersborg (SE)
(72) Inventor: Törnebäck, Göte, S-58263 Linköping (SE)
(74) Representative: Wallin, Bo-Göran

(57) **Abstract**

Connection between pieces of chain and a central supporting rubber structure of essentially unreinforced rubber together constituting an anti skid protection rotor at so called automatic antiskid devices, where the chain pieces (3) are joined to the rubber structure by means of fastening links (2), that are provided with means (6, 4), holding the rubber structure up from the ground so that the wear on the rubber is eliminated.

## Description

In the Swedish patent 8801746-2 is shown an antiskid device comprising a starshaped rubber structureor rotor provided with pieces of chain in the outer ends of the arms of the star. When used the star is rotated by the vehicle wheel successively placing the pieces of chain below the vehicle wheel. This device has proved to work very well and provides in a comfortable and soft way an increase in traction.

Since at this type of antiskid device no separate pulley is in contact with the vehicle wheel to provide the rotation of the star, this must instead be provided by the rubber arms themselves. This means that in order to throw the chains sufficiently in under the vehicle wheel the outer ends of the arms must be brought in contact with the vehicle wheel inserted between the wheel and the ground since the chains themselves are unable to transfer the necessary rotational force to the star. This has resulted in a great wear giving an unacceptable short useful life for the rubber structure. The wear on the rubber arms in the ends where the chains are fastened will be so great that the chains already after a short time are torn away.

This problem has been found so great and so difficult to solve that the solution despite its other advantages has been rejected entirely by the technicians in the field.

The invention has as its object to make the use of an antiskid device of this kind possible by providing a wear resistant connection between the rubber arms and the short chain pieces giving a long useful life for the device.

This object is in accordance with the invention in a first embodiment solved by the providing the innermost fastening chain link for each piece of chain with a protrusion of some kind that holds the radially inner end of the fastening link up from the ground. In this way the outer end of the rubber arm is also held up from the ground and instead the protrusion transfer the vertical forces transferred from the vehicle wheel to the outer ends of the rubber arms via the fastening link to the ground. Since the end of the arm is free from contact with the ground no abrasion against the ground occurs and the useful life is instead dictated by the chains, which can be hardened and thus may last a very long time. Still however the necessary tangential force or torque rotating the rubber structure is transferred to the rubber structure.

Alternatively the object of the invention to achieve a wear resistant connection between the chains and a supporting structure of in particular rubber can instead be obtained by the innermost fastening link that may be vulcanized to the rubber structure being angled so that when this link by the vehicle wheel is being pressed against the ground the inner end is lifted from the ground, the link acting as a lever. also in this embodiment the rubber structure is lifted up from contact with the ground and kept out of the force transfer from the vehicle wheel to the ground and practically no wear will occur on the rubber structure.

Of course both of the above alternatives may be used simultaneously in combination.

Since the chain carrying supporting structure will not wear one can also consider the possibility of making the chain pieces exchangeable while the supporting structure is reused.

The invention can be embodied in many ways and below two embodiments are described as nonlimiting examples with reference to the drawings. Fig. 1 shows in view from behind an antiskid device according to the invention, fig 2 a view from above of the same antiskid device and fig 3 is a detail seen in a side view and a horizontal view.

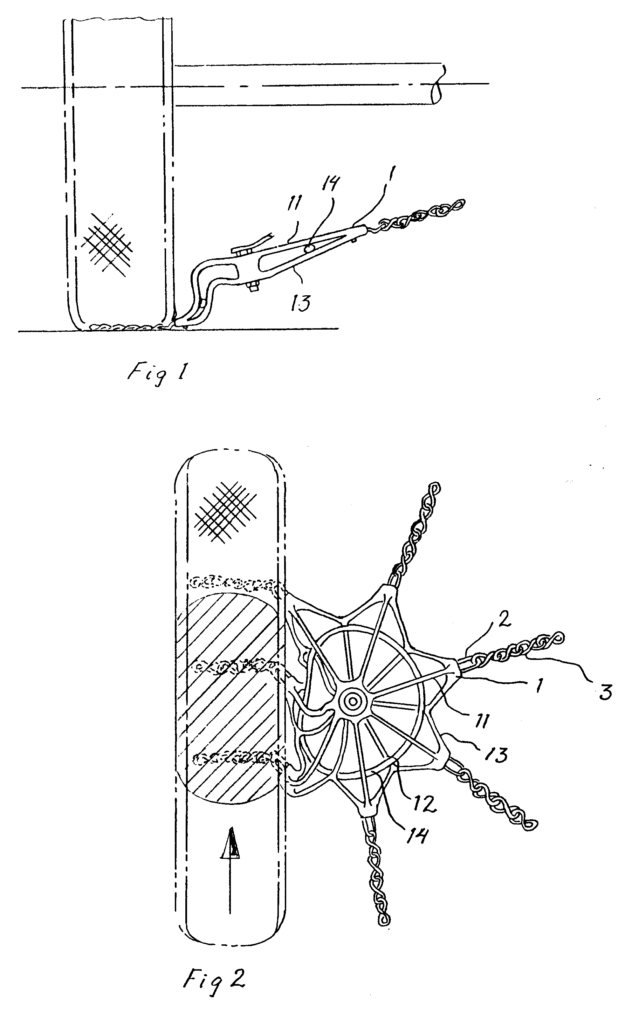

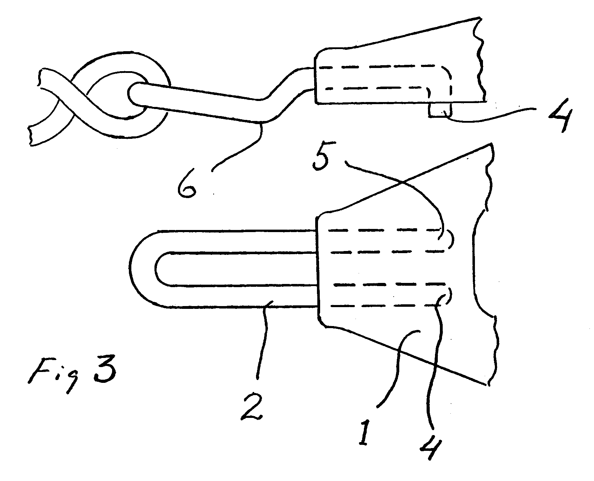

In the embodiment shown in fig 1 and 2 an arm 15 only a part of which is shown and that can be constructed and arranged according to the known art for devices of this kind holds or supports an anti skid rotational device or rotor with upper radial arms 11 and lower radial arms 12. The arms 12 are via lateral connections 13 connected to the outer 1 ends of the arms 11 and 12. This provides a framework construction that despite a good ability to support the chain pieces 3 and to maintain the structure flat, allows the great deformation that is necessary when the cain pieces successively are held under the vehicle wheel, as is clearly shown in fig 1 and 2. Between the upper and lower arms 11 an 12 respectively is located a ring 14, that efficiently contributes to holding the rotatable starlike device or rotor flat, without obstructing its flexibility. Possibly one can also consider this ring as an integer part of the star, that may be molded in one piece with this. The starlike framework structure can also be constituted by separate arm means or modules that are glued or connected in some other way.

In the outer ends 1 of the rubber arms or the tips of the star a fastening chain link 2 of a short piece 3 of chain is vulcanized into the rubber.

The fastening chain link 2 is provided with Projections or heels 4, 5, extending from the fastening chain link downwards towards the ground below the outer tip 1 of the arm and through this. When the invented device is used the protrusion will hold up the outer end of the rubber arm preventing its contact with the ground.

As can be seen the fastening link is also angled so that when its outer end is pressed against the ground by the vehicle wheel rolling over it, it will function as a lever lifting the inner end upwards pivoting around the tip of the angle. In this way also the outer ends of the arms ar lifted upwards preventing their contact with the ground and thus also the wear thereof in an efficient manner.

I addition to the protrusions or heels in the inner end of the fastening link that is vulcanized into tips or points 1 of the rubber arm the fastening link can also be provided with area increasing elements in order to increase the grip between the vulcanized metal and the rubber.

In the shown fastening of the chain pieces 3 to the outer ends 1 of the arms these and the connection between these is held up from the ground in two supplementary ways. First the angle tip 6 and the heels 4 and 5 serve as a bridge preventing the rubber for coming in contact with ground. This when the force from the vehicle wheel lies inward radially in relation to the angle of the fastening link.

Secondly the fastening link serves as a two-armed lever lifting the inner end of the fastening link and the outer end of the rubber arms upwards when the force from the vehicle wheel lies radially outward of the angle.

Due to these two the fastening or joining, of the supporting structure and chain pieces, protecting mechanisms the fastening will be protected within a comparatively large radial range corresponding to slightly more than the length of the fastening link 2. This also reduces the demand of exactness in the mounting and controlling of the anti skid device, which in particular can be of importance for wheels that steer, since the wheels on steering at many modern cars carry out lateral motions in relation to the body of the car.

Within the frame of the invention one can of course consider the use of only one of the above embodiments or principles to protect the fastening of the chain pieces in the supporting structure. For example it is conceivable to make the fastening link shorter and without the angel so that the support against the ground is achieved by means of the heels and the next chain link that grips around and below the fastening link.

Practical experiments have shown that with the described fastening the fastening link after 100 km of continuous drive on asphalt covering will only be worn slightly more than the remaining links in the chain pieces. The rubber around the fastening however was totally unaffected and unworn. This also on the upper side that is in contact with the vehicle wheel against which thus no separate contact element is needed. Presumably no movement at all take place between the vehicle wheel and the outer end of the rubber arms, and the only movements that may possibly occur take place between the chain links and the ground. Preferably all the chain links including the fastening links are made of a material with good wear resistance qualities as for instance hardened steel.

As is apparent from fig 2 the innermost chain link (fastening link) will become locked between the vehicle wheel and the ground in the position corresponding to the position obtained when the piece of chain is thrown in under the vehicle wheel and is stopped by this. The piece of chain including the fastening link will due to this locking then have small possibilities to turn until once again freed by the vehicle wheel behind this. This turning or pivoting may instead take place when the chain links are becoming free. This possible movement may give rise to some wear on the fastening link where it is in contact with the ground, but since this is of metal the wear will be small. It is also possible to increase the amount of metal at the tip of the angle, for instance by welding to compensate for this abrasion. In order to facilitate the turning of the link the apex of the angel can be made pointshaped.

In a further development of the inventive thought the fastening link may instead of being vulcanized to the supporting (rubber) structure include snap or other gripping means in order to allow detachable fastening of the pieces of chain, In this way it would be simple to exchange the short pieces of chains that after the improvements of the invention are the parts that become worn first. in this way it would be possible to improve the economic of the invention further.

For instance the fastening links may include a horizontal elongate opening into which the outer ends of the arms are inserted and were the fixing can be achieved by means of a bolt inserted vertically through fastening link as well as outer arm ends. As an alternative the fastening link can be dimensioned so sturdy that it survives a number of chain pieces that in turn can be fastened with some kind of snap hook means in the fastening link.

## Claims

1. Antiskid device of the kind that includes a supporting resilient central structure (11, 13), that on use is rotated so that pieces of chain arranged in the peripheral part of the supporting structure successively are thrown in under the vehicle wheel, **characterized in** that the pieces of chain are fastened to the supporting structure via fastening links (2) provided with force transferring means (6, 4) transferring the load directly from the fastening link to the ground so that the supporting structure is prevented from coming in contact with the ground.

2. Antiskid device according to claim 1 **characterized in** that the fastening link affixed to the supporting structure is provided with protrusions extending down through the surrounding and possibly on the fastening link vulcanized rubber supporting structure.

3. Antiskid device of the kind that includes a supporting resilient central structure (11, 13), that on use is rotated so that pieces of chain arranged in the peripheral part of the supporting structure successively are thrown in under the vehicle wheel, **characterized in** that the pieces of chain are fastened to the supporting structure via fastening links (2)an that the fastening links 2 are angled with the apex of the angle projecting downwards giving a lever with two arms lifting the outer ends of the supporting structure from the ground when the fastening link in its outer end is pressed against the ground under the vehicle wheel.

4. Antiskid device according to claim 3 **characterized in** that the fastening pieces (2) are of hard metal or are coated with hard metal in the contact points against the ground.
